# EUROPEAN PATENT SPECIFICATION

(11) **EP 3 299 227 B1**
(45) Date of publication and mention of the grant of the patent: **04.08.2021**
(21) Application number: 16795910.5
(22) Date of filing: 20.05.2016
(51) Int. Cl.: B60R 21/0134, B60R 19/20

(54) **METHOD AND DEVICE FOR PREVENTING AUTOMOBILE REAR-END COLLISION**
VERFAHREN UND VORRICHTUNG ZUR VERMEIDUNG VON AUFFAHRUNFÄLLEN
PROCÉDÉ ET DISPOSITIF POUR ÉVITER UNE COLLISION D'EXTRÉMITÉ ARRIÈRE DE VÉHICULE

(30) Priority: 20.05.2015 CN 201510261373
(43) Date of publication of application: 28.03.2018
(73) Proprietor: Zhejiang Geely Automobile Research Institute Co., Ltd., Taizhou, Zhejiang 317000 (CN); Zhejiang Geely Holding Group Co., Ltd., Zhejiang 310051 (CN)
(72) Inventor: ZHAI, Xijie, Taizhou Zhejiang 317000 (CN); ZHANG, Haiyang, Taizhou Zhejiang 317000 (CN); ZHU, He, Taizhou Zhejiang 317000 (CN); ZHOU, Dayong, Taizhou Zhejiang 317000 (CN); LIU, Weiguo, Taizhou Zhejiang 317000 (CN); LI, Chuanhai, Taizhou Zhejiang 317000 (CN); WU, Chengming, Taizhou Zhejiang 317000 (CN); FENG, Qingfeng, Taizhou Zhejiang 317000 (CN)
(74) Representative: 2K Patentanwälte Blasberg Kewitz & Reichel
(86) International application number: PCT/CN2016/082761
(87) International publication number: WO 2016/184423

(56) References cited:
- EP-A2- 1 428 728
- WO-A1-97/44216
- WO-A2-2006/074210
- CN-A- 1 565 901
- CN-A- 1 565 901
- CN-A- 102 774 378
- CN-A- 102 774 378
- CN-A- 103 395 401
- CN-A- 104 859 573
- CN-U- 203 111 103
- JP-A- 2005 132 281
- KR-A- 20130 017 294
- US-A1- 2009 218 157
- US-B2- 7 784 817

## Description

### FIELD OF THE INVENTION

The invention relates to the field of vehicle safety, and in particular, to a method and device for the rear end collision protection of a vehicle.

### BACKGROUND OF THE INVENTION

Nowadays, with the increase in vehicle accidents, more and more attention is being paid to the safety performance of vehicles, and therefore, being equipped with some safety components also becomes the minimum guarantee for pursuing the vehicle safety currently.

In a device for passively protecting an occupant, safety components, for example, a safety airbag, a safety belt, etc., have already become the standard configuration of a vehicle. The importance of the safety airbag occupies a very important position in the field of vehicle safety; the safety airbag can not only reduce the damage value of occupants in a vehicle, but also save the lives of people at a crucial moment. Therefore, the design of the safety airbag also becomes a very important link in the vehicle safety.

In the process of vehicle collision, there may be a front collision, a front offset collision, a side collision and a rear end collision, wherein the rear end collision is the most neglected. However, this does not mean that the rear end collision is most difficult to happen and its degree of injury is the least. On the contrary, the probability of occurrence of the rear end collision is very large, and its degree of injury is relatively serious, since the most vulnerable part of a person's head is the back part of the person's head, and the posterior neck part of a person is just impacted in the rear end collision. Therefore, it is necessary to raise the awareness of the degree of destruction of the rear end collision. The documents WO 97/44216 A1, WO 2006/074210 A2, US 7784817B2, KR2013 0017294A, CN102 774 378 A, US 2009/218157 A1 und CN 1565 901 A disclose airbag systems being installed in the bumpers or front sections of the car.

The document WO 97/44216 A1 discloses a prior art method and device related to the independent claims. As compared to WO 97/44216 A1, the invention has a combination of the following distinguishing features:
I) judging whether the rear vehicle distance is less than a distance threshold value, and if yes, calculating a collision time related to the approaching speed of the rear vehicle and the rear vehicle distance; and
II) detecting a front vehicle distance and the approaching speed of the front vehicle via the radar, estimating a braking occurrence time of the current vehicle according to the front vehicle distance and the approaching speed of the front vehicle, and modifying the collision time according to the braking occurrence time of the current vehicle.

To reduce personal injuries caused by the rear end collision, we can start with the stiffness of the seat headrest, or also may start by decreasing the energy at the time of rear end collision. Researches about the stiffness of the headrest have been conducted for a long time, and there is a relatively clear understanding of the shape and the stiffness of the headrest, whereas there is a lack of researches on decreasing the energy at the time of rear end collision. Thus, how to reduce personal injuries caused by the rear end collision from the perspective of decreasing the collision energy at the time of rear end collision is a problem to be solved.

### SUMMARY OF THE INVENTION

An object of the invention is to provide a method and device for the rear end collision protection of a vehicle, which can reduce personal injuries caused by a rear end collision.

To achieve the object, the invention provides a method for the rear end collision protection of a vehicle, comprising:
in a driving process of a current vehicle, detecting a rear vehicle distance by a radar;
judging whether the rear vehicle distance is less than a distance threshold value, and if yes, calculating a collision time according to the approaching speed of the rear vehicle and the rear vehicle distance; and
judging whether the collision time is less than a time threshold value, and if yes, initiating an airbag disposed at a rear bumper of the current vehicle, wherein after expanded, the airbag forms a long-strip-shaped inflatable bladder at the outside of the rear bumper of the current vehicle.

Preferably, in the above-described method, the airbag ribbon of the airbag is folded into a long strip shape, and is disposed inside the rear bumper of the current vehicle via a bolt.

Preferably, in the above-described method, after the airbag is initiated, the airbag ribbon bursts out from a tear line and it is unfolded into the long-strip-shaped inflatable bladder.

Preferably, in the above-described method, the middle part of the cross section of the long-strip-shaped inflatable bladder is rectangular, and both the upper and lower ends of the cross section are semi-circular.

Preferably, in the above-described method, in the step of calculating a collision time according to the approaching speed of the rear vehicle and the rear vehicle distance, there is further comprised: modifying the collision time according to the opening degree of the accelerator or a braking signal.

Preferably, in the above-described method, there is further comprised: detecting a front vehicle distance and the approaching speed of the front vehicle via the radar, estimating a braking occurrence time of the current vehicle according to the front vehicle distance and the approaching speed of the front vehicle, and modifying the collision time according to the braking occurrence time of the current vehicle.

To better achieve the above object, the invention further provides a device for the rear end collision protection of a vehicle, comprising:
a rear vehicle detection unit for, in a driving process of a current vehicle, detecting a rear vehicle distance by a radar;
a collision time calculation unit for judging whether the rear vehicle distance is less than a distance threshold value, and if yes, calculating a collision time according to the approaching speed of the rear vehicle and the rear vehicle distance;
an airbag control unit for judging whether the collision time is less than a time threshold value, and if yes, initiating an airbag disposed at a rear bumper of the current vehicle, wherein after expanded, the airbag forms a long-strip-shaped inflatable bladder at the outside of the rear bumper of the current vehicle.

Preferably, in the above-described device, the airbag ribbon of the airbag is folded into a long strip shape, and is disposed inside the rear bumper of the current vehicle via a bolt.

Preferably, in the above-described device, after the airbag is initiated, the airbag ribbon bursts out from a tear line and it is unfolded into the long-strip-shaped inflatable bladder; and the middle part of the cross section of the long-strip-shaped inflatable bladder is rectangular, and both the upper and lower ends of the cross section are semi-circular.

Preferably, in the above-described device, the collision time calculation unit is further used for
modifying the collision time according to the opening degree of the accelerator or a braking signal; and
detecting a front vehicle distance and the approaching speed of the front vehicle via the radar, estimating a braking occurrence time of the current vehicle according to the front vehicle distance and the approaching speed of the front vehicle, and modifying the collision time according to the braking occurrence time of the current vehicle.

The embodiments of the invention have the following technical effects:
1) such a scheme is beneficial to the protection of the neck of a dummy in a front vehicle at the time of rear end collision, and reduces injuries to occupants of a rear vehicle, and even plays a certain role in protecting the vehicles, thereby achieving the goal of multiple wins, and from the point of view of safety, such a scheme of the safety airbag for rear end collision protection is very effective;
2) in combination with a currently relatively advanced radar monitoring system, installation of a detection radar near the rear bumper of a front vehicle enables to detect the speed of a rear vehicle and the relative distance between it and the rear vehicle, and via the intelligent calculation function installed in the radar itself, an ignition signal may be issued to an ACU (airbag electronic control unit) to initiate the safety airbag to reduce injuries to persons of the two vehicles by a collision, if the collision is determined to happen and be within a certain time range;
3) the airbag in the scheme is no longer in direct contact with an occupant in a vehicle, but intervenes in the contact between vehicles, and in the process of a collision, the airbag may absorb part of the energy produced when the two vehicles collide, and thereby may achieve the goal of protecting occupants in the vehicles indirectly.

According to the detailed description of specific embodiments of the invention in conjunction with the drawings in the following, the above and other objects, advantages and features of the invention will be clearer to those skilled in the art.

### BRIEF DESCRIPTION OF THE DRAWINGS

In the following, some specific embodiments of the invention will be described in detail with reference to the drawings in an exemplary and non-limiting manner. In the drawings, identical reference signs denote identical or similar components or parts. It will be appreciated by those skilled in the art that these drawings are not necessarily drawn to scale. In the drawings,
Fig. 1 is a flow chart of steps of a method embodiment of the invention;
Fig. 2 is a structural diagram of a system embodiment of the invention;
Fig. 3 is a schematic diagram of a distance between two vehicles of an embodiment of the invention;
Fig. 4 is a schematic diagram of airbag initiation of an embodiment of the invention;
Fig. 5 is a schematic diagram of two-vehicle collision of an embodiment of the invention;
Fig. 6 is a structural diagram of airbag folding of an embodiment of the invention;
Fig. 7 is a structural diagram of airbag unfolding of an embodiment of the invention; and
Fig. 8 is a flow chart of a radar monitoring system of an embodiment of the invention.

### DETAILED DESCRIPTION OF THE INVENTION

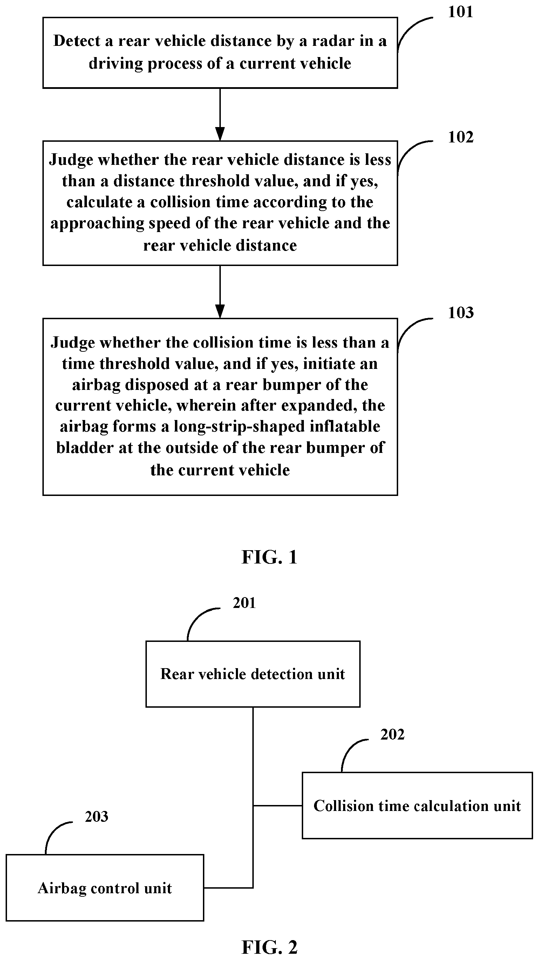

Fig. 1 is a flow chart of steps of a method embodiment of the invention. As shown in Fig. 1, an embodiment of the invention provides a method for the rear end collision protection of a vehicle, comprising:
step 101, in a driving process of a current vehicle, detecting a rear vehicle distance by a radar;
step 102, judging whether the rear vehicle distance is less than a distance threshold value, and if yes, calculating a collision time according to the approaching speed of the rear vehicle and the rear vehicle distance; and
step 103, judging whether the collision time is less than a time threshold value, and if yes, initiating an airbag disposed at a rear bumper of the current vehicle, wherein after expanded, the airbag forms a long-strip-shaped inflatable bladder at the outside of the rear bumper of the current vehicle.

It can be seen that, in the embodiment of the invention, the airbag is no longer in direct contact with an occupant in the vehicle, but intervenes in the contact between vehicles, and in the process of a collision, the airbag may absorb part of the energy produced when the two vehicles collide, and thereby may achieve the goal of protecting occupants in the vehicles indirectly. In the embodiment, by setting a distance threshold value and performing collision calculation only for a rear vehicle within the distance threshold value, the amount of computation may be decreased. By disposing a long-strip-shaped inflatable bladder, the force exerted on the airbag may be caused to be balanced, and the rear end collision may be prevented from turning sideways, achieving a comprehensive protection.

In an embodiment of the invention, the airbag ribbon of the airbag is folded into a long strip shape, and is disposed inside the rear bumper of the current vehicle via a bolt. After the airbag is initiated, the airbag ribbon bursts out from a tear line and it is unfolded into the long-strip-shaped inflatable bladder. The middle part of the cross section of the long-strip-shaped inflatable bladder is rectangular, and both the upper and lower ends of the cross section are semi-circular.

In an embodiment of the invention, in the step of calculating a collision time according to the approaching speed of the rear vehicle and the rear vehicle distance, there is further comprised: modifying the collision time according to the opening degree of the accelerator or a braking signal.

For example, the time threshold value is set to be 2 seconds, the collision time which is calculated currently is 2.5 seconds, however, it is suddenly detected at present that the current vehicle is being braked or the opening degree of the accelerator of the current vehicle decreases, which means the current vehicle will slow down immediately in the following 2 seconds, and therefore, it is necessary to modify the collision time which is calculated only according to the approaching speed of the rear vehicle and the rear vehicle distance. If the braking of the current vehicle reduces the collision time by 0.8 seconds, the collision time after modification is 1.7 seconds, which is already lower than the time threshold, and the safety airbag will be initiated. If the opening degree of the accelerator of the current vehicle decreases and reduces the collision time by 0.3 seconds, the collision time after modification is 2.2 seconds, which is not yet lower than the time threshold, and the safety airbag will not be initiated.

In the process of calculating the collision time, the calculated result necessarily has a certain delay, and there is a time course from that the current vehicle performs a brake or acceleration operation to that it is reflected in the change in speed, and to that it is found by the radar and the collision time is calculated, and it is difficult to absolutely guarantee completely timely finding out the effect of the sudden change in speed on the collision time. Therefore, in an embodiment of the invention, there is further comprised: detecting a front vehicle distance and the approaching speed of the front vehicle via the radar, estimating a braking occurrence time of the current vehicle according to the front vehicle distance and the approaching speed of the front vehicle, and modifying the collision time according to the braking occurrence time of the current vehicle. In this way, the slowdown trend is anticipated in advance, the preparation is made in advance, and the change of the collision time may be estimated more accurately.

However, no matter how the calculation is performed, in order that it must be guaranteed that the safety airbag is opened absolutely before the collision, an embodiment of the invention further specifies the following auxiliary modification rules, for example, at the time of high speed, short distance and braking. In particular, when the vehicle speed is larger than 80 kilometers per hour, the rear vehicle distance is less than 5 meters, and the current vehicle performs a braking operation, at this point, it is automatically confirmed that the collision time is less than the time threshold, and the safety airbag is initiated. In the embodiment, the ratio of speed to distance may be set as a basis for judgment. For example, when the vehicle speed is larger than 50 kilometers per hour and there is a brake, the numerical ratio of vehicle speed to distance is 10:1. If the speed is 60 kilometers per hour, the braking will initiate the airbag if the distance is less than 6 meters, and if the speed is 70 kilometers per hour, the braking will initiate the airbag if the distance is less than 7 meters. That is, when the numerical ratio of the present vehicle speed to the rear vehicle distance reaches 10:1, the braking will initiate the airbag.

Fig. 2 is a structural diagram of a system embodiment of the invention. As shown in Fig. 2, a device for the rear end collision protection of a vehicle comprises:
a rear vehicle detection unit 201 for, in a driving process of a current vehicle, detecting a rear vehicle distance by a radar;
a collision time calculation unit 202 for judging whether the rear vehicle distance is less than a distance threshold value, and if yes, calculating a collision time according to the approaching speed of the rear vehicle and the rear vehicle distance;
an airbag control unit 203 for judging whether the collision time is less than a time threshold value, and if yes, initiating an airbag disposed at a rear bumper of the current vehicle, wherein after expanded, the airbag forms a long-strip-shaped inflatable bladder at the outside of the rear bumper of the current vehicle.

In the device, the airbag ribbon of the airbag is folded into a long strip shape, and is disposed inside the rear bumper of the current vehicle via a bolt. After the airbag is initiated, the airbag ribbon bursts out from a tear line and it is unfolded into the long-strip-shaped inflatable bladder; and the middle part of the cross section of the long-strip-shaped inflatable bladder is rectangular, and both the upper and lower ends of the cross section are semi-circular.

In the device, the collision time calculation unit is further used for modifying the collision time according to the opening degree of the accelerator or a braking signal; and detecting a front vehicle distance and the approaching speed of the front vehicle via the radar, estimating a braking occurrence time of the current vehicle according to the front vehicle distance and the approaching speed of the front vehicle, and modifying the collision time according to the braking occurrence time of the current vehicle.

In the device, the collision time calculation unit is further used for initiating the airbag when the current vehicle is braked, if the numerical ratio of the present vehicle speed to the rear vehicle distance reaches 10:1.

It can be seen that the embodiments of the invention propose this safety airbag scheme for rear end collision protection starting from reducing the energy at the time of rear end collision and in combination with the currently cost-effective safety airbag. This safety scheme for protecting occupants at the time of rear end collision takes the relatively conventional safety airbag structure as the basis, and incorporates the currently relatively hot radar monitoring system, thereby achieving the goal of reducing injuries to occupants.

The scheme of the embodiments of the invention has the following characteristics:
1) such a scheme is beneficial to the protection of the neck of a dummy in a front vehicle at the time of rear end collision, and reduces injuries to occupants of a rear vehicle, and even plays a certain role in protecting the vehicles, thereby achieving the goal of multiple wins, and from the point of view of safety, such a scheme of the safety airbag for rear end collision protection is very effective;
2) in combination with a currently relatively advanced radar monitoring system, installation of a detection radar near the rear bumper of a front vehicle enables to detect the speed of a rear vehicle and the relative distance between it and the rear vehicle, and via the intelligent calculation function installed in the radar itself, an ignition signal may be issued to an ACU (airbag electronic control unit) to initiate the safety airbag to reduce injuries to persons of the two vehicles by a collision, if the collision is determined to happen and be within a certain time range;
3) the airbag in the scheme is no longer in direct contact with an occupant in a vehicle, but intervenes in the contact between vehicles, and in the process of a collision, the airbag may absorb part of the energy produced when the two vehicles collide, and thereby may achieve the goal of protecting occupants in the vehicles indirectly.

Through the introduction of the three aspects, it can be seen that the proposal of such a safety scheme for protecting occupants at the time of rear end collision is a combination of a conventional technique and a novel technique, and by proposing this safety scheme for protecting occupants at the time of rear end collision, some unnecessary personal injuries may be reduced, thereby achieving the purpose of vehicle safety performance.

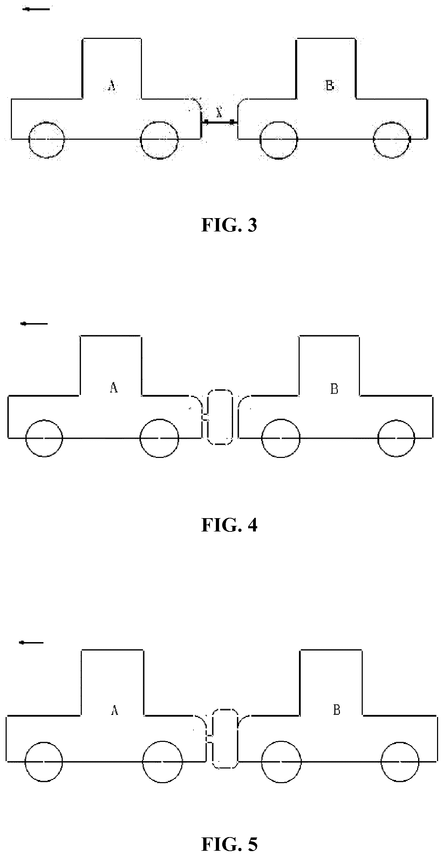

Fig. 3, Fig. 4 and Fig. 5 are schematic diagrams of a distance between two vehicles, airbag initiation, and two-vehicle collision, respectively. As shown in the figures, the working principles of the safety scheme for protecting occupants at the time of rear end collision of the embodiments of the invention are as follows.

In a driving process of a vehicle, a rear-mounted radar detection system of vehicle A (the current vehicle) always detects the distance between it and vehicle B (the rear vehicle), and delivers the dynamic distance between the two vehicles to an on-board computing system, and the possibility of collision if it is driven at that speed all the time is calculated through an algorithm in the system. As shown in Fig. 3, when the distance between the two vehicles is X, the radar detects that the relative displacement between the two vehicles is too small, and the speed of the vehicle B does not have a tendency to decrease. If the situation continues like this, there must be a rear end collision, and at this point, an ignition signal is issued to an ACU (airbag electronic control unit). As shown in Fig. 4, the airbag is initiated rapidly. Before the two vehicles collide, an enough initiation time is left, and the best scheme is that the airbag is rapidly inflated, and just when the airbag is inflated to the maximum extent, the two vehicles collide. As shown in Fig, 5, at this time, the airbag is completely full, and then the vehicle B also meets the airbag of the vehicle A. Then, the vehicle B begins to contact the airbag, and afterwards, the airbag will begin to be slowly deflated under the compression of the vehicle B. In the course of the compression, the airbag absorbs the energy produced at the time of collision, thus reducing the excess energy delivered to occupants, whether they are occupants of the front vehicle, or occupants of the rear vehicle. The part of the energy that is absorbed can reduce injuries to occupants of the front and rear vehicles by the collision, thereby playing a role in safety.

To better introduce such a safety scheme for protecting occupants at the time of rear end collision, it is necessary to introduce in detail the key components therein, and what will be mainly introduced are the airbag and the radar monitoring system, etc.

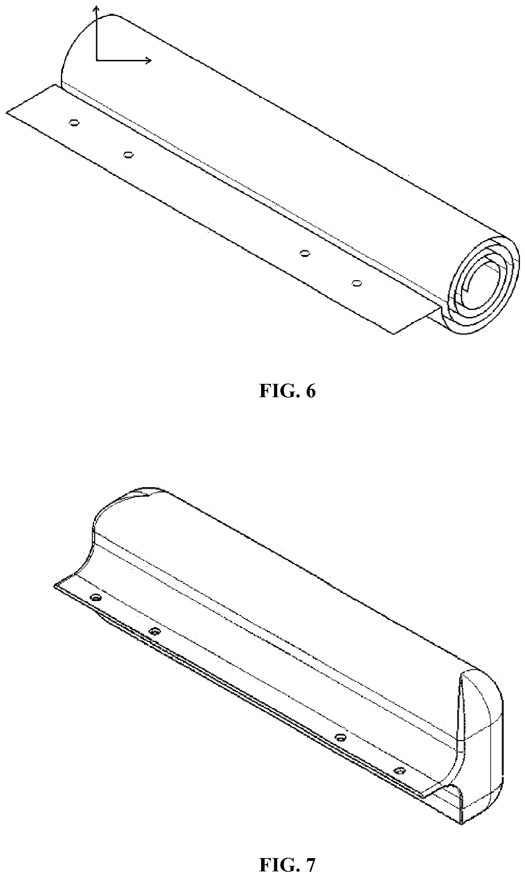

Fig. 6 is a structural diagram of airbag folding. The state of the airbag after folded is as shown in Fig. 6, the four bolt holes in the figure are to secure it to the position of a rear bumper of the vehicle, and the ribbon after folded is inside the rear bumper. After the ACU issues an initiation signal, the airbag ribbon will be unfolded along a tear line, and the unfolded airbag is as shown in a structural diagram of airbag unfolding of Fig. 7.

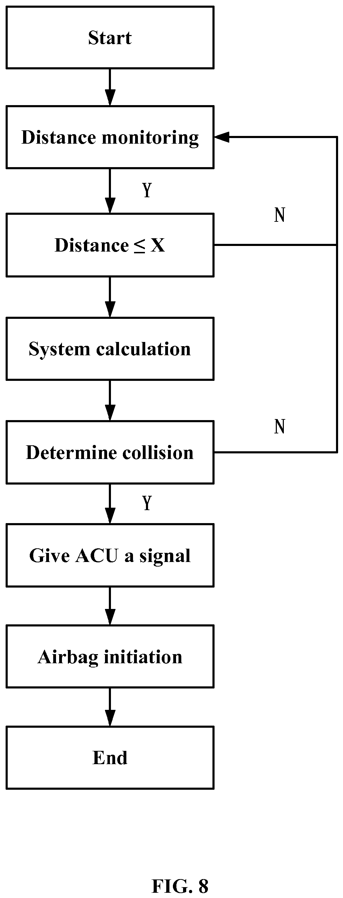

In the safety scheme for protecting occupants at the time of rear end collision, the radar monitoring system plays a very important role, and it is equivalent to the brain in a human body, whereas the airbag is equivalent to an arm in the human body. A flow chart of the radar monitoring system is as shown in Fig. 8. It can be seen from Fig. 8 that after the system is started, the radar monitoring system is always in the working state. Only after the distance is less than X, the calculation is started, and it is determined whether a collision takes place through an algorithm inputted to the system by itself. Moreover, after the collision is determined, a signal is given to the ACU, otherwise, detection of the distance is performed again. As such, it may be ensured that the initiation of the airbag is not allowed in a case in which a collision is not determined, and waste is reduced.

From the above, the invention has the following advantages:
1) in the embodiments of the invention, the airbag is no longer in direct contact with an occupant in a vehicle, but intervenes in the contact between vehicles, and in the process of a collision, the airbag may absorb part of the energy produced when the two vehicles collide, and thereby may achieve the goal of protecting occupants in the vehicles indirectly. By setting a distance threshold value and performing collision calculation only for a rear vehicle within the distance threshold value, the amount of computation may be decreased. By disposing a long-strip-shaped inflatable bladder, the force exerted on the airbag may be caused to be balanced, and the rear end collision may be prevented from turning sideways, achieving a comprehensive protection.
2) in the embodiments of the invention, the collision time is modified according to the opening degree of the accelerator or a braking signal. Further, the braking occurrence time of the current vehicle is estimated according to the front vehicle distance and the approaching speed of the front vehicle, the slowdown trend is anticipated in advance, the preparation is made in advance, and the change of the collision time may be estimated more accurately.
3) in the embodiments of the invention, the following auxiliary modification rule is specified, that is, the safety airbag is opened at the time of high speed, short distance and braking, to guarantee that the safety airbag is absolutely opened before a collision.

## Claims

1. A method for the rear end collision protection of a vehicle comprising:
in a driving process of a current vehicle, detecting a rear vehicle distance by a radar;
judging whether the rear vehicle distance is less than a distance threshold value, and if yes, calculating a collision time according to the approaching speed of the rear vehicle and the rear vehicle distance;
detecting a front vehicle distance and the approaching speed of the front vehicle via the radar, estimating a braking occurrence time of the current vehicle according to the front vehicle distance and the approaching speed of the front vehicle, and modifying the collision time according to the braking occurrence time of the current vehicle; and
judging whether the collision time is less than a time threshold value, and if yes, initiating an airbag disposed at a rear bumper of the current vehicle, wherein after expanded, the airbag forms a long-strip-shaped inflatable bladder at the outside of the rear bumper of the current vehicle.

2. The method as claimed in claim 1, **characterized in that** the airbag ribbon of the airbag is folded into a long strip shape, and is disposed inside the rear bumper of the current vehicle via a bolt.

3. The method as claimed in claim 2, **characterized in that**, after the airbag is initiated, the airbag ribbon bursts out from a tear line and it is unfolded into the long-strip-shaped inflatable bladder.

4. The method as claimed in claim 3, **characterized in that** the middle part of the cross section of the long-strip-shaped inflatable bladder is rectangular, and both the upper and lower ends of the cross section are semi-circular.

5. The method as claimed in claim 1, **characterized in that**, in the step of calculating a collision time according to the approaching speed of the rear vehicle and the rear vehicle distance, there is further comprised: modifying the collision time according to the opening degree of the accelerator or a braking signal.

6. A device for the rear end collision protection of a vehicle comprising:
a rear vehicle detection unit for, in a driving process of a current vehicle, detecting a rear vehicle distance by a radar;
a collision time calculation unit for judging whether the rear vehicle distance is less than a distance threshold value, and if yes, calculating a collision time according to the approaching speed of the rear vehicle and the rear vehicle distance;
an airbag control unit for judging whether the collision time is less than a time threshold value, and if yes, initiating an airbag disposed at a rear bumper of the current vehicle, wherein after expanded, the airbag forms a long-strip-shaped inflatable bladder at the outside of the rear bumper of the current vehicle;
wherein the collision time calculation unit is further used for detecting a front vehicle distance and the approaching speed of the front vehicle via the radar, estimating a braking occurrence time of the current vehicle according to the front vehicle distance and the approaching speed of the front vehicle, and modifying the collision time according to the braking occurrence time of the current vehicle.

7. The device as claimed in claim 6, **characterized in that** the airbag ribbon of the airbag is folded into a long strip shape, and is disposed inside the rear bumper of the current vehicle via a bolt.

8. The device as claimed in claim 7, **characterized in that**, after the airbag is initiated, the airbag ribbon bursts out from a tear line and it is unfolded into the long-strip-shaped inflatable bladder; and the middle part of the cross section of the long-strip-shaped inflatable bladder is rectangular, and both the upper and lower ends of the cross section are semi-circular.

9. The device as claimed in claim 6, **characterized in that** the collision time calculation unit is further used for
modifying the collision time according to the opening degree of the accelerator or a braking signal.

## Patentansprüche

1. Verfahren für den Auffahrunfallschutz eines Fahrzeugs, das Folgendes umfasst:
bei einem Fahrvorgang eines aktuellen Fahrzeugs, Erfassen eines hinteren Fahrzeugabstands durch ein Radar;
Beurteilen, ob der Abstand des hinteren Fahrzeugs kleiner als ein Abstandsschwellenwert ist, und wenn ja, Berechnen einer Kollisionszeit entsprechend der Annäherungsgeschwindigkeit des hinteren Fahrzeugs und des hinteren Fahrzeugabstands;
Erfassen eines Frontfahrzeugabstands und der Annäherungsgeschwindigkeit des Frontfahrzeugs über das Radar, Schätzen einer Bremszeit des aktuellen Fahrzeugs gemäß dem Frontfahrzeugabstand und der Annäherungsgeschwindigkeit des Frontfahrzeugs, und Modifizieren der Kollisionszeit gemäß der Bremszeit des aktuellen Fahrzeugs; und
Beurteilen, ob die Kollisionszeit kleiner als ein Zeitschwellenwert ist, und wenn ja, Auslösen eines Airbags, der an einem hinteren Stoßfänger des aktuellen Fahrzeugs angeordnet ist, wobei der Airbag nach dem Entfalten eine langstreifenförmige aufblasbare Blase an der Außenseite des hinteren Stoßfängers des aktuellen Fahrzeugs bildet.

2. Verfahren nach Anspruch 1, **dadurch gekennzeichnet, dass** das Airbag-Band/Ribbon des Airbags in eine lange Streifenform gefaltet wird und über einen Bolzen innerhalb des hinteren Stoßfängers des aktuellen Fahrzeugs angeordnet wird.

3. Verfahren nach Anspruch 2, **dadurch gekennzeichnet, dass** nach dem Auslösen des Airbags das Airbag-Band aus einer Reißlinie herausspringt und sich in die längsgestreckte, aufblasbare Blase entfaltet.

4. Verfahren nach Anspruch 3, **dadurch gekennzeichnet, dass** der mittlere Teil des Querschnitts der längsgestreckten, aufblasbaren Blase rechteckig ist und sowohl das obere als auch das untere Ende des Querschnitts halbkreisförmig sind.

5. Verfahren nach Anspruch 1, **dadurch gekennzeichnet, dass** im Schritt des Berechnens einer Kollisionszeit in Abhängigkeit von der Annäherungsgeschwindigkeit des hinteren Fahrzeugs und des hinteren Fahrzeugabstands ferner enthalten ist: Modifizieren der Kollisionszeit in Abhängigkeit vom Öffnungsgrad des Gaspedals oder eines Bremssignals.

6. Eine Vorrichtung für den Auffahrunfallschutz eines Fahrzeugs, die Folgendes umfasst:
eine Heckfahrzeug-Erkennungseinheit, um bei einem Fahrvorgang eines aktuellen Fahrzeugs einen Heckfahrzeugabstand mittels eines Radars zu erfassen;
eine Kollisionszeitberechnungseinheit zum Beurteilen, ob der Abstand des hinteren Fahrzeugs kleiner als ein Abstandsschwellenwert ist, und wenn ja, zum Berechnen einer Kollisionszeit entsprechend der Annäherungsgeschwindigkeit des hinteren Fahrzeugs und dem Abstand des hinteren Fahrzeugs;
eine Airbag-Steuereinheit zum Beurteilen, ob die Kollisionszeit kleiner als ein Zeitschwellenwert ist, und wenn ja, zum Auslösen eines Airbags, der an einer hinteren Stoßstange des aktuellen Fahrzeugs angeordnet ist, wobei der Airbag nach dem Entfalten eine längsgestreckte aufblasbare Blase an der Außenseite der hinteren Stoßstange des aktuellen Fahrzeugs bildet;
wobei die Kollisionszeitberechnungseinheit weiterhin dazu verwendet wird, einen Frontfahrzeugabstand und die Annäherungsgeschwindigkeit des Frontfahrzeugs über das Radar zu erfassen, eine Bremszeit des aktuellen Fahrzeugs gemäß dem Frontfahrzeugabstand und der Annäherungsgeschwindigkeit des Frontfahrzeugs zu schätzen und die Kollisionszeit gemäß der Bremszeit des aktuellen Fahrzeugs zu modifizieren.

7. Vorrichtung nach Anspruch 6, **dadurch gekennzeichnet, dass** das Airbag-Band/Ribbion des Airbags in eine lange Streifenform gefaltet ist und über einen Bolzen innerhalb der hinteren Stoßstange des aktuellen Fahrzeugs angeordnet ist.

8. Vorrichtung nach Anspruch 7, **dadurch gekennzeichnet, dass** nach dem Auslösen des Airbags das Airbag-Band aus einer Reißlinie herausbricht und es sich in die längsgestreckte e aufblasbare Blase entfaltet; und der mittlere Teil des Querschnitts der längsgestreckten aufblasbaren Blase rechteckig ist und sowohl das obere als auch das untere Ende des Querschnitts halbkreisförmig sind.

9. Vorrichtung nach Anspruch 6, **dadurch gekennzeichnet, dass** die Kollisionszeitberechnungseinheit weiterhin zur Modifizierung der Kollisionszeit in Abhängigkeit vom Öffnungsgrad des Gaspedals oder eines Bremssignals verwendet wird.

## Revendications

1. Un procédé de protection contre une collision arrière d'un véhicule, comprenant :
détecter, dans un processus de conduite d'un véhicule actuel, d'une distance de véhicule à l'arrière au moyen d'un radar;
juger si la distance du véhicule arrière est inférieure à une valeur de seuil de distance, et dans l'affirmative, calculer un temps de collision en fonction de la vitesse d'approche du véhicule arrière et de la distance du véhicule arrière;
détecter une distance de véhicule avant et la vitesse d'approche du véhicule avant via le radar, et estimer un temps d'occurrence de freinage du véhicule actuel en fonction de la distance du véhicule avant et de la vitesse d'approche du véhicule avant, et modifier le temps de collision en fonction de l'instant d'occurrence de freinage du véhicule actuel; et
juger si le temps de collision est inférieure à une valeur seuil de temps, et dans l'affirmative déclenche un coussin disposé au niveau d'un pare-choc arrière du véhicule actuel, dans lequel à la suite de son gonflage, l'airbag forme une vessie gonflable en forme de longue bande à l'extérieur du pare-choc arrière du véhicule actuel.

2. Le procédé tel que revendiqué dans la revendication 1, **caractérisé en ce que** le ruban de coussin gonflable du coussin gonflable est plié en une forme de longue bande et est disposé à l'intérieur du pare-chocs arrière du véhicule actuel via un boulon.

3. Le procédé tel que revendiqué dans la revendication 2, **caractérisé en ce que**, après le déclenchement du coussin gonflable, le ruban du coussin gonflable éclate à partir d'une ligne de déchirure et il est déplié dans la vessie gonflable en forme de longue bande.

4. Le procédé tel que revendiqué dans la revendication 3, **caractérisé en ce que** la partie médiane de la section transversale de la vessie gonflable en forme de longue bande est rectangulaire, et les deux extrémités supérieure et inférieure de la section transversale sont semi-circulaires.

5. Le procédé tel que revendiqué dans la revendication 1, **caractérisé en ce que**, dans l'étape de calcul d'un temps de collision en fonction de la vitesse d'approche du véhicule arrière et de la distance du véhicule arrière, il est en outre compris: la modification du temps de collision en fonction du degré d'ouverture de l'accélérateur ou un signal de freinage.

6. Un dispositif de protection contre les collisions arrière d'un véhicule, **caractérisé en ce qu'**il comprend:
une unité de détection d'un véhicule arrière pour, dans un processus de conduite d'un véhicule actuel, détecter une distance d'un véhicule arrière par un radar;
une unité de calcul d'un temps de collision pour juger si la distance du véhicule arrière est inférieure à une valeur de seuil de distance, et dans l'affirmative, calculer un temps de collision en fonction de la vitesse d'approche du véhicule arrière et de la distance du véhicule arrière;
une unité de commande d'un coussin gonflable pour juger si le temps de collision est inférieur à une valeur de seuil de temps, et dans l'affirmative, déclencher un coussin gonflable disposé au niveau d'un pare-chocs arrière du véhicule actuel, dans lequel, après expansion, le coussin gonflable forme une vessie gonflable en forme de longue bande à l'extérieur du pare-chocs arrière du véhicule actuel.
dans lequel l'unité de calcul du temps de collision est en outre utilisée pour détecter une distance d'un véhicule à l'avant et la vitesse d'approche du véhicule avant via le radar, estimer un instant d'occurrence de freinage du véhicule actuel en fonction de la distance du véhicule avant et la vitesse d'approche du véhicule avant, et modifier l'instant de collision en fonction de l'instant d'occurrence du freinage du véhicule actuel.

7. Le dispositif tel que revendiqué dans la revendication 6, **caractérisé en ce que** le ruban de coussin du coussin gonflable est plié en forme de longue bande et est disposé à l'intérieur du pare-chocs arrière du véhicule actuel via un boulon.

8. Le dispositif tel que revendiqué dans la revendication 7, **caractérisé en ce que**, après le déclenchement du coussin gonflable, le ruban du coussin gonflable éclate à partir d'une ligne de déchirure et il est déplié dans la vessie gonflable en forme de longue bande; et la partie médiane de la section transversale de la vessie gonflable en forme de longue bande est rectangulaire, et les deux extrémités supérieure et inférieure de la section transversale sont semi-circulaires.

9. Le dispositif selon la revendication 6, **caractérisé en ce que** l'unité de calcul du temps de collision est en outre utilisée pour modifier le temps de collision en fonction du degré d'ouverture de l'accélérateur ou d'un signal de freinage.
